Europäisches Patentamt

European Patent Office

Office européen des brevets

(19)

(11) Veröffentlichungsnummer: **0 029 209**
**B1**

(12) **EUROPÄISCHE PATENTSCHRIFT**

(45) Veröffentlichungstag der Patentschrift:
02.11.83

(21) Anmeldenummer: 80106978.2

(22) Anmeldetag: 12.11.80

(51) Int. Cl.³: **H 04 L 13/08,** H 04 L 1/18,
G 06 F 13/00

(54) Schaltungsanordnung zur Speicherung von Informationen in datenübertragungstechnischen Abonnentenpunkten.

(30) Priorität: 16.11.79 HU TE000941

(43) Veröffentlichungstag der Anmeldung:
27.05.81 Patentblatt 81/21

(45) Bekanntmachung des Hinweises auf die Patenterteilung:
02.11.83 Patentblatt 83/44

(84) Benannte Vertragsstaaten:
AT DE FR GB SE

(56) Entgegenhaltungen:
DE - A - 1 921 056
DE - B - 1 294 432
FR - A - 1 344 357
US - A - 3 421 147
US - A - 3 458 654
US - A - 3 972 034

IBM TECHNICAL DISCLOSURE BULLETIN, Band 17, Nr. 3, August 1974, New York, US, WILLIAMS: "High-speed random-access memory with simultaneous read/write operation" Seiten 933, 934

(73) Patentinhaber: Telefongyár, Hungária krt. 126-132,
Budapest XIV (HU)

(72) Erfinder: Sass, Szilárd, Dipl.-Ing., Szalag u. 6,
H-1011 Budapest (HU)
Erfinder: Bauer, Alfréd, Dipl.-Ing., Horvath u.28,
H-1027 Budapest (HU)
Erfinder: Schöller, László, Dipl.-Ing., György A.u.9,
H-1125 Budapest (HU)
Erfinder: Keller, János, Körvasut sor 102/a,
H-1141 Budapest (HU)
Erfinder: Hatlaczky, István, Dipl.-Ing., Bajcsy Zs. u. 50,
H-2235 Mende (HU)
Erfinder: Körmendy, Attila, Dipl.-Ing., Eperjes u. 62,
H-1204 Budapest (HU)

(74) Vertreter: Lehn, Werner, Dipl.-Ing. et al, Hoffmann, Eitle
& Partner Patentanwälte Arabellastrasse 4 (Sternhaus),
D-8000 München 81 (DE)

## Schaltungsanordnung zur Speicherung von Informationen in datenübertragungstechnischen Abonnentenpunkten

Die Erfindung betrifft eine Schaltungsanordnung zur Speicherung von Informationen in datenübertragungstechnischen Abonnentenpunkten, welche eine Zeichenspeichereinheit, eine an deren Ausgang angeschlossene Blockspeichereinheit mit einer Blockspeicheruntergruppe mit auf den eigenen Eingang rückgekoppeltem Ausgang sowie eine mit der Zeichenspeicher- und der Blockspeichereinheit verbundene Steuer- und Verzögerungseinheit aufweist. Eine derartige Schaltungsanordnung ist durch die DE-B-1 294 432 bekannt geworden.

Im Bereich der Rechentechnik rückt die Frage nach der Möglichkeit der Übertragung von Informationen zu Erfassungs- und Bearbeitungssystemen über Fernsprech- oder Fernschreibkanäle immer mehr in den Vordergrund. Die wichtigsten Baugruppen derartiger Systeme sind die Abonnentenpunkte in Form von Terminals oder Endgeräten, die im allgemeinen aus einer Steuereinheit, einer Zeichenumwandlungseinheit und peripheren Einrichtungen wie Eingabe- und Ausgabegeräten zur Ein- und/oder Ausgabe der Informationen zusammengesetzt sind.

Eine Grundforderung für derartige Systeme ist die fehlerfreie Übertragungsmöglichkeit von Informationen zwischen Sender- und Empfängerseite. Angesichts dieses Prinzips muss in diesen Systemen ein entsprechender Fehlerschutz vorgesehen werden, und nach Entdeckung eines Fehlers muss eine automatische Zeichenwiederholung angefordert werden. Zur Fehlererkennung und Datenwiederholung müssen die übertragenen Daten für eine bestimmte Dauer abgespeichert werden, und für die datenübertragungstechnischen Abonnentenpunkte sind deshalb oft eine Speichereinheit sowie eine damit verbundene Steuereinheit vorgesehen.

Die Anwendungsmöglichkeit derartiger Schaltungen zur Informationsspeicherung wird in herkömmlichen datenübertragungstechnischen Abonnentenpunkten durch die folgenden Mängel erheblich eingeschränkt:

1. Ein gleichzeitiges Ein- bzw. Auslesen der Speichereinheit ist unmöglich; erst nach vollständigem Einlesen des Speichers kann ausgelesen werden;

2. Nur nach wiederholtem Einlesen in den Speicher können die Zeichen wiederholt werden;

3. Es gibt keine Möglichkeiten zur Prüfung, Ergänzung und Löschung der in den Speicher eingelesenen Zeichen während der Funktion.

Die vorliegende Erfindung bezweckt die Beseitigung der obengenannten Mängel.

Der Erfindung liegt die Aufgabe zugrunde, eine Schaltungsanordnung zur Informationsspeicherung in datenübertragungstechnischen Abonnentenpunkten zu schaffen, mit welcher die Information, abgesehen von den Funktionsdauern, im wesentlichen gleichzeitig ein- und ausgespeichert und die Zeichen ohne wiederholtes Einlesen beliebig oft reproduziert, ergänzt bzw. gelöscht sowie wie im Laufe des Betriebes geprüft werden können.

Diese Aufgabe wird mit einer Schaltungsanordnung der eingangs beschriebenen Art dadurch gelöst, dass die Zeichenspeichereinheit eine erste Zeichenspeicheruntergruppe und eine zweite Zeichenspeicheruntergruppe in Reihe geschaltet aufweist und dass eine Zeichenspeicher-Steuerungsuntergruppe vorgesehen ist, die mit der ersten Zeichenspeicheruntergruppe über einen ersten Dekodierer und mit der zweiten Zeichenspeicheruntergruppe über einen zweiten Dekodierer in Verbindung steht.

In einer vorteilhaften Ausführungsform der erfindungsgemässen Schaltungsanordnung ist die mit der Zeichenspeichereinheit und der Blockspeichereinheit verbundene Steuer- und Verzögerungseinheit mit der Zeichenspeicher-Steuerungsuntergruppe und mit einer Blockspeicher-Steuerungs- und Verzögerungsuntergruppe ausgerüstet.

In einer weiteren vorteilhaften Ausführungsform ist der Paralleleingang der ersten Zeichenspeicheruntergruppe über eine erste Kombinationsschaltung mit dem Parallelinformationseingang der Zeichenspeichereinheit verbunden.

Eine vorteilhafte Ausführungsform ergibt sich daraus, dass der Parallelausgang der zweiten Zeichenspeicheruntergruppe über eine zweite Kombinationsschaltung mit dem Parallelinformationsausgang der Blockspeichereinheit verbunden ist.

Vorteilhafterweise wird der Ausgang der Blockspeicheruntergruppe über eine dritte Kombinationsschaltung und eine vierte Kombinationsschaltung mit dem Serieneingang der ersten Zeichenspeicheruntergruppe verbunden.

Es ist ebenfalls vorteilhaft, wenn die dritte Kombinationsschaltung über eine fünfte, an einem Ausgang der dritten Kombinationsschaltung angeschlossene Kombinationsschaltung am Serieninformationsausgang der Blockspeichereinheit angeschlossen ist.

Bei einer vorteilhaften Ausführung ist der Eingang der Blockspeicheruntergruppe über eine sechste Kombinationsschaltung und eine siebente Kombinationsschaltung mit dem Serieninformationseingang der Zeichenspeichereinheit verbunden.

Bei einer weiteren Ausführungsform wird der Ausgang der zweiten Zeichenspeicheruntergruppe zweckmässigerweise über eine achte Kombinationsschaltung auf seinen Eingang rückgekoppelt.

Schliesslich ist vorteilhafterweise die erste Zeichenspeicheruntergruppe mit der zweiten Zeichenspeicheruntergruppe über die achte Kombinationsschaltung verbunden.

Der grundlegende Vorteil der erfindungsgemässen Schaltungsanordnung liegt darin, dass die Ein- bzw. Ausgabe der Informationen praktisch gleichzeitig und voneinander unabhängig durchgeführt wird. Die Möglichkeit zur Kontrolle, Wiederholung und Löschung während des Zeichenverkehrs bedeutet überdies einen weiteren Vorteil. Die erfindungsgemässe Schaltungsanordnung kann zur Ausführung aller Kombinationen der seriellen und parallelen Ein- und Ausgabe ausgestattet werden.

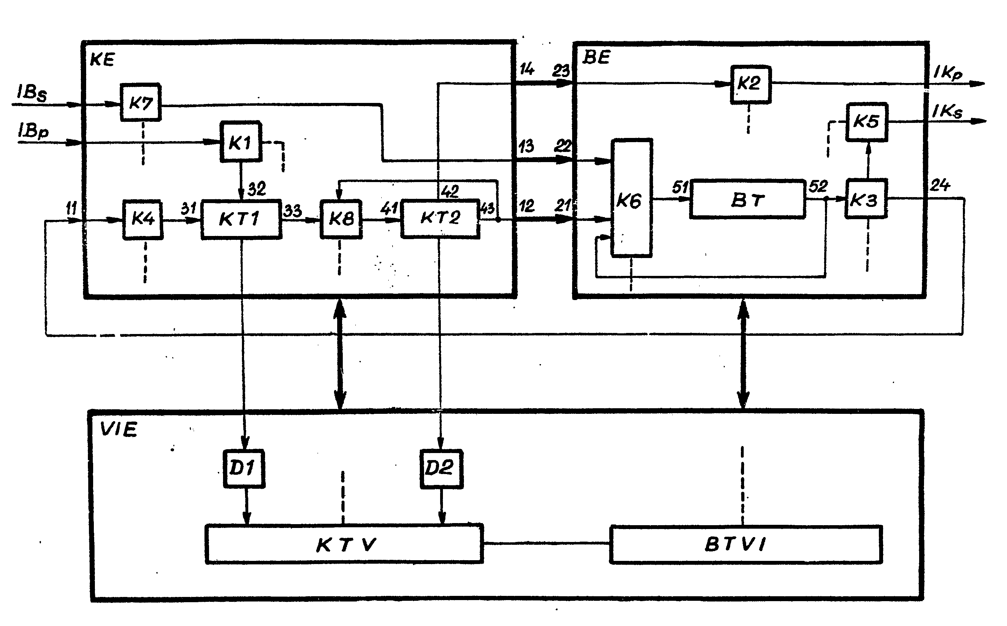

Im folgenden ist die Erfindung in bezug auf ein Ausführungsbeispiel anhand der Zeichnung eingehend erörtert.

Die einzige Figur der Zeichnung zeigt ein Blockschaltbild der Schaltungsanordnung zur Informationsspeicherung.

Das Ausführungsbeispiel der Schaltungsanordnung zur Informationsspeicherung weist eine Zeichenspeichereinheit KE, eine Blockspeichereinheit BE und eine Steuer- und Verzögerungseinheit VIE auf. Die Zeichenspeichereinheit KE weist einen Serieninformationseingang IBs, einen Parallelinformationseingang IBp, einen dritten Eingang 11 sowie je einen ersten, zweiten und dritten Ausgang 12, 13 und 14 und die Blockspeichereinheit BE einen Serieninformationsausgang IKs, einen Parallelinformationsausgang IKp, einen dritten Ausgang 24 sowie je einen ersten, zweiten und dritten Eingang 21, 22 und 23 auf.

Die Zeichenspeichereinheit KE hat eine erste Zeichenspeicheruntergruppe KT1 und eine zweite Zeichenspeicheruntergruppe KT2, die miteinander in Reihe verbunden sind. Die erste Zeichenspeicheruntergruppe KT1 weist einen Serieneingang 31, einen Paralleleingang 32 und einen Serienausgang 33 und die zweite Zeichenspeicheruntergruppe KT2 einen Serieneingang 41, einen Parallelausgang 42 und einen Serienausgang 43 auf.

Der Paralleleingang 32 der ersten Zeichenspeicheruntergruppe KT1 ist über eine erste Kombinationsschaltung K1 am Parallelinformationseingang IBp, der Parallelausgang 42 der zweiten Zeichenspeicheruntergruppe KT2 über eine zweite Kombinationsschaltung K2 der Blockspeichereinheit BE an deren Parallelinformationsausgang IKp angeschlossen.

Die Blockspeichereinheit BE besitzt eine Blockspeicheruntergruppe BT, die einen Eingang 51 und einen Ausgang 52 aufweist. Dieser Ausgang 52 steht über eine dritte Kombinationsschaltung K3 mit dem dritten Ausgang 24 der Blockspeichereinheit BE in Verbindung, wobei diese letztere mit dem dritten Eingang 11 der Zeichenspeichereinheit KE bzw. über eine vierte Kombinationsschaltung K4 mit dem Serieneingang 31 der ersten Zeichenspeicheruntergruppe KT1 verbunden ist.

Der Ausgang 52 der Blockspeicheruntergruppe BT ist über die dritte Kombinationsschaltung K3 und eine weitere fünfte Kombinationsschaltung K5 auch mit dem Serieninformationsausgang IKs der Blockspeichereinheit BE verbunden und gleichzeitig über eine sechste Kombinationsschaltung K6 auf den Eingang 51 der Blockspeicheruntergruppe BT rückgekoppelt. Der Serieninformationseingang IBs der Zeichenspeichereinheit KE ist über eine siebente Kombinationsschaltung K7, die in der Zeichenspeichereinheit KE untergebracht ist, sowie über den zweiten Ausgang 13 der Zeichenspeichereinheit KE, den zweiten Eingang 22 der Blockspeichereinheit BE und die sechste Kombinationsschaltung K6 ebenfalls mit dem Eingang 51 der Blockspeicheruntergruppe BT verbunden. Hieran ist über den ersten Ausgang 12 der Zeichenspeichereinheit KE, den ersten Eingang 21 der Blockspeichereinheit BE und die sechste Kombinationsschaltung K6 auch der Serienausgang 43 der zweiten Zeichenspeicheruntergruppe KT2 angeschlossen.

Der Serieneingang 41 der zweiten Zeichenspeicheruntergruppe KT2 ist über eine achte Kombinationsschaltung K8 mit dem Serienausgang 33 der Zeichenspeicheruntergruppe KT1 verbunden.

Der Ausgang 43 der zweiten Zeichenspeicheruntergruppe KT2 ist über die achte Kombinationsschaltung K8 auf deren Eingang 41 rückgekoppelt.

Die Steuer- und Verzögerungseinheit VIE besitzt eine Zeichenspeicher-Steuerungsuntergruppe KTV und eine Blockspeicher-Steuerungs- und Verzögerungsuntergruppe BTVI, die sowohl untereinander als auch mit den Untergruppen und Kombinationsschaltungen der Zeichenspeichereinheit KE und der Blockspeichereinheit BE auf an sich bekannte und daher hier nicht eingehend beschriebene Weise in Verbindung stehen.

Weiter ist die Zeichenspeicher-Steuerungseinheit KTV über einen ersten Dekodierer D1 bzw. einen zweiten Dekodierer D2 mit der ersten Zeichenspeicheruntergruppe KT1 bzw. der zweiten Zeichenspeicheruntergruppe KT2 verbunden.

In drei grundsätzlichen Betriebsarten wird die Funktion der beispielshalber dargestellten Schaltungsanordnung zur Informationsspeicherung im folgenden verdeutlicht:

1. Parallele Informationseingabe – parallele Informationsausgabe (IBp-IKp);

2. Parallele Informationseingabe – serielle Informationsausgabe (IBp-IKs);

3. Serielle Informationseingabe – parallele Informationsausgabe (IBs-IKp).

Im Betrieb IBp-IKp verhindert die Blockspeicher-Steuerungs- und Verzögerungsuntergruppe BTVI über die Zeichenspeicher-Steuerungsuntergruppe KTV und die sechste Kombinationsschaltung K6 den Betrieb der Blockspeicheruntergruppe BT sowie der dritten, der vierten, der fünften und der siebenten Kombinationsschaltungen K3, K4, K5 und K7. Die Informationen (Zeichen mit einer Länge von max. acht Bits) erreichen die erste Zeichensteueruntergruppe KT1 über den Parallelinformationseingang IBp und die erste Kombinationsschaltung K1 auf parallele Weise (erster Takt). Aus der ersten Zeichenspeicheruntergruppe KT1 gehen die Informationen durch die Zeichenspeicher-Steuerungsuntergruppe KTV bestimmt über die achte Kombinationsschaltung K8 serienmässig in die zweite Zeichensteueruntergruppe KT2 (zweiter Takt). Die Informationsausgabe erfolgt, durch die Zeichenspeicher-Steuerungsuntergruppe KTV bestimmt, über die zweite Kombinationsschaltung K2 (dritter Takt).

Der aus den Takten 1 bis 3 aufgebaute Zyklus spielt sich bei jedem Zeichen immer wieder ab. Während der Übertragung der informationsenthaltenden Zeichen kann der Inhalt des Zeichens bzw. der Zeichenpaare in der ersten und der zweiten Zeichenspeicheruntergruppe KT1 und KT2 über den ersten und zweiten Dekodierer D1 und D2 kontrolliert werden, und dementsprechend ist während der Übertragungszyklen durch Änderung der Steuersignale der Zeichenspeicher-Steuerungsuntergruppe KTV die Ergänzung mit beliebigen Zeichen oder die Zeichenlöschung möglich.

In dieser Betriebsart baut sich der Übertragungszyklus folgendermassen auf: IBp-K1-KT1-K8-KT2-K2-IKp.

Im Betrieb IBp-IKs verhindert die Blockspeicher-Steuerungs- und Verzögerungsuntergruppe BTVI über die Zeichenspeicher-Steuerungsuntergruppe KTV den Betrieb der zweiten, der vierten und der siebenten Kombinationsschaltungen K2, K4 und K7. Der erste und der zweite Takt des Übertragungszyklus stimmt mit denen des Betriebes IBp-IKp überein. Dann wird hier jedoch der Inhalt der zweiten Zeichenspeicheruntergruppe KT2 (Zeichen mit max. acht Bits) über die sechste Kombinationsschaltung K6 zur Blockspeicheruntergruppe BT geführt, welche die Speicherung von zwei sog. Informationsblocks mit Bits angegebener Anzahl ermöglicht. Die Blocklängen können im Ausmass der Kapazität der Blockspeicheruntergruppe BT geändert werden.

Aus der zweiten Zeichenspeicheruntergruppe KT2 werden die Informationen, d.h. die Informationsbits in der Blockspeicheruntergruppe BT, in den Speicherfeldern, die mit durch die Blockspeicher-Steuerungs- und Verzögerungsuntergruppe BTVI bestimmten ansteigenden Adressen (z.B. die acht Bits des ersten Zeichens auf Adressen 0 bis 7) markiert sind, aufgezeichnet. Nach Aufzeichnung zirkuliert die Information in der Blockspeicheruntergruppe BT mit hoher Geschwindigkeit in der rückgekoppelten Schleife, die durch den Ausgang 52, die Kombinationsschaltung K6 und den Eingang 51 bestimmt ist.

Das Einlesen der Bits des folgenden Zeichens erfolgt wie oben beschrieben, nur mit dem Unterschied, dass die Bits nun auf die auf der Reihe folgender Adressen der Blockspeicheruntergruppe BT (z.B. auf Adressen 8 bis 15) geschrieben werden. Beim Laden der Blockspeicheruntergruppe BT kommt also eine doppelte Eingabe zustande, und zwar die Rückspeicherung der früher eingelesenen (zirkulierenden) Informationen auf dieselben Adressen und das Einlesen der neuen, von der zweiten Zeichenspeicheruntergruppe KT2 erhaltenen Informationen auf weitere (freie) Adressen.

Die Ausgabe der in der Blockspeicheruntergruppe BT befindlichen Informationen erfolgt bitweise in zunehmender Reihenfolge der Adressen, d.h. in derselben Reihenfolge, in der die Eingabe stattfand. Den Serieninformationsausgängen IKs werden die während des Umlaufes am Ausgang der Blockspeicheruntergruppe BT auftretenden Bits über die dritte und die fünfte Kombinationsschaltungen K3 und K5 von den durch die Blockspeicher-Steuerungs- und Verzögerungsuntergruppe BTVI bestimmten Adressen und im durch diese bestimmten Zeitpunkt zugeführt. Die Übertragung eines Bits in die dritte Kombinationsschaltung K3 erfolgt mit einer Geschwindigkeit, die mit der Umlaufgeschwindigkeit übereinstimmt, während die Ausgabe aus der fünften Kombinationsschaltung K5 mit einer wesentlich niedrigeren Geschwindigkeit erfolgt.

Die Informationsausgabe aus der Blockspeicheruntergruppe BT kann unmittelbar nach Eingabe des ersten Zeichens begonnen werden, d.h. das Abwarten der Auffüllung der Blockspeicheruntergruppe BT mit Blocks ist überflüssig. Die Rückspeicherung (Umlauf) der Informationen ermöglicht darüber hinaus, jedweden abgespeicherten Block beliebig oft wiederholt auszugeben. Während des wiederholten Zyklus wird die Zeicheneingabe aus der zweiten Zeichenspeicheruntergruppe KT2 sicher verhindert.

Der Inhalt der in den Zeichenspeicheruntergruppen KT1 und KT2 befindlichen Zeichen bzw. Zeichenpaare kann über die Dekodierer D1 und D2 auch in diesem Betrieb überwacht und dementsprechend eine Ergänzung oder Löschung vorgenommen werden.

In diesem Betrieb baut sich der Übertragungszyklus folgenderweise auf: IBp-K1-KT1-K8-KT2-K6-BT-K3-K5-IKs.

Im Betrieb IBs-IKp wird der Betrieb der ersten und der fünften Kombinationsschaltung K1 und K5 von der Blockspeicher-Steuerungs- und Verzögerungsuntergruppe BTVI über die Zeichenspeicher-Steuerungsuntergruppe KTV verhindert. Die Informationen werden bitweise über den Serieninformationseingang IBs, die siebente und die sechste Kombinationsschaltung K7 und K6 in die Blockspeicheruntergruppe BT in die Speicherfelder, die mit den durch die Blockspeicher-Steuerungs- und Verzögerungsuntergruppe BTVI bestimmten ansteigenden Adressen markiert sind, geschrieben, bis Informationen in der Länge eines Blockes eingetragen werden (fünfter Takt). Bewirkt durch die Steuerungs- und Verzögerungssignale der Blockspeicher-Steuerungs- und Verzögerungsuntergruppe BTVI und der Zeichenspeicher-Steuerungsuntergruppe KTV werden die in der Blockspeicheruntergruppe BT befindlichen Informationen bitseriell und zeichenweise über die dritte und vierte Kombinationsschaltung K3 und K4 in die erste Zeichenspeicheruntergruppe KT1 geladen (sechster Takt). Von nun an erfolgt die Informationsausgabe entsprechend dem zweiten und dritten Takt des Betriebes IBp-IKp. Die Übertragung der Zeichen von der Blockspeicheruntergruppe BT zum Parallelinformationsausgang IKp dauert bis zu dem Zeitpunkt an, wobei der abgespeicherte Block restlos ausgegeben wird.

Auch das Löschen des in der Blockspeicheruntergruppe BT abgespeicherten Blockes ist durch den Befehl der Blockspeicher-Steuerungs- und Verzögerungsuntergruppe BTVI möglich.

In diesem Betrieb kann der Inhalt der in den Zeichenspeicheruntergruppen KT1 und KT2 befindlichen Zeichen bzw. Zeichenpaare über die Dekodierer D1 und D2 ebenfalls überwacht und dementsprechend eine Ergänzung oder Löschung vorgenommen werden.

In dieser Betriebsart baut sich der Übertragungszyklus wie folgt auf: IBs-K7-K6-BT-K3-K4-KT1-K8-KT2-K2-IKp.

## Patentansprüche

1. Schaltungsanordnung zur Speicherung von Informationen in datenübertragungstechnischen Abonnentenpunkten, welche eine Zeichenspeichereinheit (KE), eine an deren Ausgang angeschlossene Blockspeichereinheit (BE) mit einer Blockspeicheruntergruppe (BT) mit auf den eigenen Eingang rückgekoppeltem Ausgang sowie eine mit der Zeichenspeicher- und der Blockspeichereinheit verbundene Steuer- und Verzögerungseinheit (VIE) aufweist, dadurch gekennzeichnet, dass die Zeichenspeichereinheit (KE) eine erste Zeichenspeicheruntergruppe (KT1) und eine zweite Zeichenspeicheruntergruppe (KT2) in Reihe geschaltet aufweist und dass eine Zeichenspeicher-Steuerungsuntergruppe (KTV) vorgesehen ist, die mit der ersten Zeichenspeicheruntergruppe (KT1) über einen ersten Dekodierer (D1) und mit der zweiten Zeichenspeicheruntergruppe (KT2) über einen zweiten Dekodierer (D2) in Verbindung steht.

2. Schaltungsanordnung nach Anspruch 1, dadurch gekennzeichnet, dass die mit der Zeichenspeichereinheit (KE) und der Blockspeichereinheit (BE) verbundene Steuer- und Verzögerungseinheit (VIE) mit der Zeichenspeicher-Steuerungsuntergruppe (KTV) und mit einer Blockspeicher-Steuerungs- und Verzögerungsuntergruppe (BTVI) ausgerüstet ist.

3. Schaltungsanordnung nach Anspruch 1, dadurch gekennzeichnet, dass der Paralleleingang der ersten Zeichenspeicheruntergruppe (KT1) über eine erste Kombinationsschaltung (K1) mit dem Parallelinformationseingang (IB$_p$) der Zeichenspeichereinheit (KE) verbunden ist.

4. Schaltungsanordnung nach Anspruch 1, dadurch gekennzeichnet, dass der Parallelausgang der zweiten Zeichenspeicheruntergruppe (KT2) über eine zweite Kombinationsschaltung (K2) mit dem Parallelinformationsausgang (IK$_p$) der Blockspeichereinheit (BE) verbunden ist.

5. Schaltungsanordnung nach Anspruch 1, dadurch gekennzeichnet, dass der Ausgang der Blockspeicheruntergruppe (BT) über eine dritte Kombinationsschaltung (K3) und eine vierte Kombinationsschaltung (K4) mit dem Serieneingang der ersten Zeichenspeicheruntergruppe (KT1) verbunden ist.

6. Schaltungsanordnung nach Anspruch 5, dadurch gekennzeichnet, dass die dritte Kombinationsschaltung (K3) über eine fünfte, an einem Ausgang der dritten Kombinationsschaltung (K3) angeschlossene Kombinationsschaltung (K5) am Serieninformationsausgang (IKs) der Blockspeichereinheit (BE) angeschlossen ist.

7. Schaltungsanordnung nach Anspruch 1, dadurch gekennzeichnet, dass der Eingang der Blockspeicheruntergruppe (BT) über eine sechste Kombinationsschaltung (K6) und eine siebente Kombinationsschaltung (K7) mit dem Serieninformationseingang (IBs) der Zeichenspeichereinheit (KE) verbunden ist.

8. Schaltungsanordnung nach Anspruch 1, dadurch gekennzeichnet, dass der Ausgang der zweiten Zeichenspeicheruntergruppe (KT2) über eine achte Kombinationsschaltung (K8) auf den eigenen Eingang rückgekoppelt ist.

9. Schaltungsanordnung nach Anspruch 1, dadurch gekennzeichnet, dass die erste Zeichenspeicheruntergruppe (KT1) mit der zweiten Zeichenspeicheruntergruppe (KT2) über die achte Kombinationsschaltung (K8) verbunden ist.

## Claims

1. Circuit arrangement for the storage of information in technical data-transmission subscriber stations, which comprises a data-word store unit (KE), a block store unit (BE) connected to its output and comprising a block store sub-unit (BT) with output connected as a feed-back to its own input, as well as a control and delay unit (VIE) connected to the data-word store unit and to the block store unit, characterised in that the data-word store unit (KE) comprises a first data-word store sub-unit (KT1) and a second data-word store sub-unit (KT2) connected in series, and in that there is provided a data-word store control sub-unit (KTV) which is connected to the first data-word store sub-unit (KT1) by way of a first decoder (D1) and to the second data-word store sub-unit (KT2) by way of a second decoder (D2).

2. Circuit arrangement according to claim 1, characterised in that the control and delay unit (VIE) connected to the data-word store unit (KE) and to the block store unit (BE) is equipped with the data-word store control sub-unit (KTV) and with a block store control and delay sub-unit (BTVI).

3. Circuit arrangement according to claim 1, characterised in that the parallel input of the first data-word store sub-unit (KT1) is connected by way of a first combinational circuit (K1) with the parallel information input (IB$_p$) of the data-word store unit (KE).

4. Circuit arrangement according to claim 1, characterised in that the parallel output of the second data-word store sub-unit (KT2) is connected by way of a second combinational circuit (K2) with the parallel information output (IK$_p$) of the block store unit (BE).

5. Circuit arrangement according to claim 1, characterised in that the output of the block store sub-unit (BT) is connected by way of a third combinational circuit (K3) and a fourth combinational circuit (K4) with the series input of the first data-word store sub-unit (KT1).

6. Circuit arrangement according to claim 5, characterised in that the third combinational circuit (K3) is connected by way of a fifth combinational circuit (K5), connected to one output of the third combinational circuit (K3), to the series information output (IKs) of the block store unit (BE).

7. Circuit arrangement according to claim 1, characterised in that the input of the block store sub-unit (BT) is connected by way of a sixth combinational circuit (K6) and a seventh combinational circuit (K7) with the series information input (IBs) of the data-word store unit (KE).

8. Circuit arrangement according to claim 1, characterised in that the output of the second data-word store sub-unit (KT2) is connected as a feedback to its own input by way of an eighth combinational circuit (K8).

9. Circuit arrangement according to claim 1, characterised in that the first data-word store sub-unit (KT1) is connected with the second data-word store sub-unit (KT2) by way of the eighth combinational circuit (K8).

## Revendications

1. Circuit combiné pour l'emmagasinage d'informations à des postes d'abonné à la fourniture de données, qui comprend une unité de mémoire de signes (KE), une unité de mémoire de blocs (BE) raccordée à la sortie de celle-ci avec un sous-groupe de mémoire de blocs (BT) dont la sortie est bouclée en retour avec sa propre entrée, ainsi qu'une unité de commande et de retard (VIE) reliée à l'unité de mémoire de signes et à l'unité de mémoire de blocs, caractérisé en ce que l'unité de mémoire de signes (KE) comprend un premier sous-groupe de mémoire de signes (KT1) et un deuxième sous-groupe de mémoire de signes (KT2) montés en série, cependant qu'il est prévu un sous-groupe de commande de mémoire de signes (KTV) qui est en liaison avec le premier sous-groupe de mémoire de signes (KT1) par l'intermédiaire d'un premier décodeur (D1) et avec le deuxième sous-groupe de mémoire de signes (KT2) par l'intermédiaire d'un deuxième décodeur (D2).

2. Circuit combiné selon la revendication 1, caractérisé en ce que l'unité de commande et de retard (VIE) reliée à l'unité de mémoire de signes (KE) et à l'unité de mémoire de blocs (BE) est équipée du sous-groupe de commande de mémoire de signes (KTV) et d'un sous-groupe de commande et de retard de mémoire de blocs (BTV1).

3. Circuit combiné selon la revendication 1, caractérisé en ce que l'entrée parallèle du premier sous-groupe de mémoire de signes (KT1) est reliée par l'intermédiaire d'un premier circuit de combinaison (K1) à l'entrée d'informations parallèle (IBp) de l'unité de mémoire de signes (KE).

4. Circuit combiné selon la revendication 1, caractérisé en ce que la sortie parallèle du deuxième sous-groupe de mémoire de signes (KT2) est reliée par l'intermédiaire d'un deuxième circuit de combinaison (K2) à la sortie d'informations parallèle (IKp) de l'unité de mémoire de blocs (BE).

5. Circuit combiné selon la revendication 1, caractérisé en ce que la sortie du sous-groupe de mémoire de blocs (BT) est reliée par l'intermédiaire d'un troisième circuit de combinaison (K3) et d'un quatrième circuit de combinaison (K4) à l'entrée série du premier sous-groupe de mémoire de signes (KT1).

6. Circuit combiné selon la revendication 5, caractérisé en ce que le troisième circuit de combinaison (K3) est relié par l'intermédiaire d'un cinquième circuit de combinaison (K5) raccordé à une sortie du troisième circuit de combinaison (K3) à la sortie d'informations série (IKs) de l'unité de mémoire de blocs (BE).

7. Circuit combiné selon la revendication 1, caractérisé en ce que l'entrée du sous-groupe de mémoire de blocs (BT) est reliée par l'intermédiaire d'un sixième circuit de combinaison (K6) et d'un septième circuit de combinaison (K7) à l'entrée d'informations série (IBs) de l'unité de mémoire de signes (KE).

8. Circuit combiné selon la revendication 1, caractérisé en ce que la sortie du deuxième sous-groupe de mémoire de signes (KT2) est bouclée en retour avec sa propre entrée, par l'intermédiaire d'un huitième circuit de combinaison (K8).

9. Circuit combiné selon la revendication 1, caractérisé en ce que le premier sous-groupe de mémoire de signes (KT1) est relié au deuxième sous-groupe de mémoire de signes (KT2) par l'intermédiaire du huitième circuit de combinaison (K8).

KE

BE

$IB_S$

$IB_p$

K7

K1

K4

KT1

K8

KT2

K6

BT

K3

K2

K5

$IK_p$

$IK_s$

11

31

32

33

41

42

43

12

21

13

22

14

23

24

51

52

VIE

D1

D2

KTV

BTVI

0 029 209